# EUROPEAN PATENT APPLICATION

(11) **EP 3 680 201 A1**
(43) Date of publication of application: **15.07.2020**
(21) Application number: 19218115.4
(22) Date of filing: 19.12.2019
(51) Int. Cl.: B65G 49/06, B66C 13/08, B66C 17/06

(54) **DEVICE AND METHOD FOR MOVING PLATE-LIKE ELEMENTS**

(30) Priority: 09.01.2019 IT 201900000271
(71) Applicant: Movetro S.r.l., 61122 Pesaro (PU) (IT)
(72) Inventor: MISTRELLO, Giorgio, I-35040 PONSO (PD) (IT)
(74) Representative: Susanetto, Carlo

(57) **Abstract**

A device (1) for moving plate-like elements (100) comprises a carriage (2) which can be moved along a transport direction (X), and a carrier frame (3), on which the plate-like elements (100) are supported. The carrier frame is coupled under the carriage in order to be moved into a position raised off the ground and is rigidly secured to the carriage by means of an articulated connection (10) with free oscillation in such a manner that the carrier frame (3) can oscillate freely about a first oscillation axis (Y), at least over a limited extent, away from and towards a position of free suspension of the carrier frame (3) with respect to the carriage (2).

## Description

### Technical field

The present invention relates to a device for moving plate-like elements having the features set out in the preamble of independent claim 1.

It is also directed towards a method for moving plate-like elements by means of such a device.

### Technological background

The present invention is used preferably though not exclusively in the field of moving plate-like elements of different types inside storage warehouses.

In particular, the plate-like elements are preferably glass panes, but the invention may also be applied similarly to plates of different materials, for example, plates of marble, metal, wood, plastics material or composite material.

The plate-like elements for which the present invention is particularly designed have considerable dimensions in the order of several metres both in terms of width, for example, between 2 and 12 metres, and in terms of height, for example, between 1 and 3.5 metres, with a thickness which is generally between 1 and 25 milli metres.

Consequently, even the weight of such elements is relevant, particularly under consideration of the fact that they generally have to be moved in bundles comprising different plate-like element units, for example, from 2 to 50.

The movement of plate-like elements, such as the ones described above, is typically carried out by means of an overhead crane which, in a general configuration thereof, comprises a carriage which can slide along a support beam and a carrier frame which is engaged with the carriage by means of ropes and on which there are supported the plate-like elements which are intended to be moved. Generally, the support beam is also movable along guides which are suitably positioned at the ends of the beam and which extend perpendicularly to the longitudinal dimension thereof.

In this manner, the plate-like elements can be advantageously moved in the horizontal plane in the two directions which are defined by the beam and the guides thereof and in the vertical direction as a result of the action of a winch which controls the length of the ropes by means of which the carrier frame is suspended on the carriage.

The plate-like elements can be moved inside a storage area between different support frames in order, for example, to prepare a consignment to be loaded subsequently on a transport means.

Taking the dimensions, weights and materials involved into consideration, the movement of the plate-like elements between one frame and another is obviously a very complex operation.

In fact, even a minimal error in terms of positioning the carrier frame during both the loading and the unloading step, with respect to the support frame from which the plate-like elements are lifted and on which they have to be supported, may cause serious damage to the plate-like elements being moved and/or the plate-like elements which are already present on the support frame.

Furthermore, during the step of unloading the plate-like elements from the carrier frame, it is highly desirable for the unloaded plate-like elements to be supported on the support frame or on the other plate-like elements which are already present on the support frame, with a precise inclination, for example, equal to that of the plate-like elements on which it is supported, if present. This characteristic is important in order to prevent, with the support of subsequent plate-like elements, the inclination with respect to the vertical direction from becoming greater and greater, reducing the total quantity of plate-like elements which are supported on the support frame and, in the worst case, risking that these elements can slide off onto the ground.

In the prior art, the movement operation is carried out manually under the strict control of an operator who moves the overhead crane and the carrier frame.

Notwithstanding the ability of the operator, however, the movement remains an operation which is subject to human error, besides being particularly risky. In fact, a broken plate inside a bundle is also a serious danger for the operator who carries out the movement thereof.

Alternatively, for the movement of plate-like elements there can also be used specific lifting carriages, for example, with lateral loading, which require, however, great spaces for manoeuvring which substantially reduce the relative storage capacity with respect to more conventional overhead crane systems. Furthermore, such lifting carriages require in any case the presence of operators for guiding it, which does not reduce the risk of errors during the movement steps of the plate-like elements.

In the technical field, there is a strong need to provide a movement device which allows greater control and greater automation so as to substantially reduce both the level of risk connected with this operation and the dependency on the presence of an operator.

### Definitions

The term "plate-like element" is intended to be an object having a main two-dimensional extent with a width and a length of at least an order of magnitude greater than the dimension of the thickness.

By way of example, plate-like elements for which the present invention is very suitable have width and length dimensions between 1 and 12 metres and a thickness between 1 mm and 25 mm.

Two elements are "rigidly secured" to each other when they are directly connected to each other, for example, by means of a hinge type connection, or when they are connected to each other by means of rigid members with respect to which they can at most move in translation or rotation.

Examples of elements which are rigidly secured are a pair of elements which are hinged to each other or a pair of elements in which the first element is engaged in a sliding manner inside a guide which is formed on the second element. Conversely, two elements which are connected to each other by a deformable member, such as, for example, a rope, are not rigidly secured to each other.

The term "articulated connection with free oscillation" is intended to be understood to be a mechanical connection between two elements in which there is allowed a relative oscillation movement between the two elements about at least one oscillation axis and this movement is free and is not influenced (therefore, neither impeded nor promoted) by external elements.

This connection may be a hinge and may therefore allow the relative oscillation about a single oscillation axis, or a spherical joint and may therefore allow the relative oscillation about a plurality of oscillation axes.

A position of a first element suspended on a second element is referred to as "free suspension" when the first element is in a position of stable equilibrium with the individual centre of gravity vertically aligned with respect to the suspension location of the first element on the second element.

### Disclosure of invention

The problem addressed by the present invention is to construct a device for moving plate-like elements which is structurally and functionally configured to comply with the need set out above, at least partially overcoming the limitations set out above with reference to the cited prior art.

In particular, the present invention is intended to provide a device for moving plate-like elements which is capable of operating in a substantially automatic manner, ensuring at the same time a correct and safe movement and positioning of the plate-like elements and a simple and efficient regulation of the individual positioning in space in order to facilitate the loading and unloading operations of the plate-like elements.

These objects and other objects are achieved by the present invention by means of a movement device constructed according to the appended claims and a corresponding method for moving same.

In a first aspect thereof, therefore, the present invention is directed towards a device for moving plate-like elements comprising a carriage, which can be moved along a transport direction, and a carrier frame, on which the plate-like elements are intended to be supported and which is coupled under the carriage in order to be moved at least in the transport direction into a position raised off the ground.

The carrier frame is rigidly secured to the carriage by means of an articulated connection with free oscillation, in such a manner that the carrier frame can oscillate freely about a first oscillation axis, at least over a limited extent, away from and towards a position of free suspension of the carrier frame with respect to the carriage.

In this manner, as a result of the provision of a rigid securing between the carriage and the carrier frame, that is to say, a securing action carried out by means of elements which are rigid though articulated to each other, the movement device is sufficiently rigid for the real position thereof to correspond to a theoretical position calculated, for example, by means of movement coordinates or detected by means of sensors which are installed in the device, but, at the same time, the provision of an articulated connection which allows free oscillation of the carrier frame with respect to the carriage about the position of free suspension thereof, also allows maintenance of a suitable margin of safety if this correspondence should be found to be slightly incorrect.

In fact, the Applicant has established how, in a movement system such as the one being discussed, the number and complexity of the parameters of the variables involved do not allow the achievement of a level of safety during positioning of the movement device so as to be able to dispense with any degree of freedom of the system without using mechanisms and/or equipment which are excessively expensive.

The device to which the present invention relates is therefore an effective point of equilibrium between the above-mentioned opposing requirements which allows automation of the movement system, maintaining an optimum level of precision and safety during positioning of the plate-like elements.

In the above-mentioned aspect, the present invention may have one or more of the preferred features described below.

Preferably, the carriage, on which the carrier frame is suspended is secured with the ability to slide on a support beam, or more preferably on a pair of support beams, which extends horizontally in the transport direction.

Preferably, the support beam is movable in a horizontal direction perpendicular to the transport direction. For example, the support beam may be supported at the longitudinal ends thereof on a pair of guides which are fixed to the walls of a warehouse, or at the top of a pair of uprights which are in turn mounted slidingly on a pair of rails which are fixed to the ground (overhead crane with portal).

It may be noted that the same weight of the carriage, the carrier frame and the plate-like elements brings about a deformation of the support beam which makes the precise determination of the positioning in space of the carrier frame more complicated, thus making it even more advantageous and important to provide a degree of freedom of the movement system which is represented by the articulated connection with free oscillation.

In a preferred embodiment, this articulated connection comprises a first connection element which is secured to the carrier frame and a second connection element which is secured to the carriage, wherein the first connection element is hinged to the second connection element in order to freely oscillate about the first oscillation axis.

In an alternative embodiment, the first and second connection elements are connected to each other by means of a spherical joint.

Preferably, the first oscillation axis extends substantially perpendicularly to the transport direction.

Preferably, the carrier frame is secured to the first connection element with a capacity for relative movement with respect thereto. In particular, the movement is preferably a translation movement and takes place in a direction which does not pass through the centre of gravity of the system which is formed by the carrier frame and the first connection element.

In a particularly preferred manner, there is provided between the first connection element and the carrier frame a motorized movement member which is provided to move the carrier frame with respect to the first connection element along a guide system.

The provision of these features advantageously allows movement of the carrier frame with respect to the first connection element and therefore with respect to the articulation location of the first connection element with the second connection element. This movement involves a variation of the inclination of the carrier frame with respect to a vertical plane and therefore with respect to the carriage when the carrier frame is in the position of free suspension. In fact, the movement of the carrier frame with respect to the first connection element also brings about a movement of the centre of gravity of the system which is formed by the carrier frame and the first connection element (and of any plate-like elements which are present on the carrier frame), which will naturally tend (as a result of gravitational force) to move to the vertical with respect to the first oscillation axis, causing the entire system to oscillate about this axis and therefore varying the inclination of the carrier frame with respect to the vertical plane.

In this manner, therefore, it is readily possible to vary the inclination of the plate-like elements, promoting the loading and unloading operations thereof on or from the carrier frame.

In a preferred embodiment, the second connection element comprises a bar, on which the first connection element is hinged. Preferably, the bar is secured to the carriage with a capacity for free oscillation with respect thereto.

In an even more preferable manner, the bar is supported on the carriage by means of a pair of rods, each of which is articulated to an end of the bar and to the carriage so as to form, as a whole, an articulated quadrilateral.

Preferably, the bar extends parallel to the transport direction.

In this manner, there is introduced into the system a second degree of freedom which allows an additional free movement of the carrier frame with respect to the carriage. In particular, the provision of an articulated quadrilateral system allows the carrier frame to move freely with respect to the carriage without varying the individual inclination with respect to the vertical direction.

In a further preferred embodiment, the second connection element comprises a rocker arm which is secured to the carriage by means of a hinge coupling in order to oscillate about a second oscillation axis. Preferably, the second oscillation axis is substantially parallel with the transport direction.

In this manner, the carrier frame can also oscillate with respect to the carriage about an oscillation axis which is parallel with the transport direction so as to also allow stresses which laterally involve the plate-like elements and/or the carrier frame to be taken up, which include, for example, the inevitable accelerations and decelerations correlated with the movement of the carrier frame towards the unloading frame.

Preferably, the second connection element comprises a pair of bars, which are parallel and spaced apart and which are supported on the rocker arm at symmetrically opposite sides with respect to the second oscillation axis.

Preferably, each bar is supported on the rocker arm by a respective pair of rods which are articulated at the opposite ends to the rocker arm and the bar.

In this manner, the second connection element comprises a pair of articulated quadrilaterals, each of which is formed by a bar, by a pair of articulated rods and by an end region of the rocker arm.

Preferably, there are interposed between the rocker arm and the carriage, at one side and the other of the second oscillation axis, respective damping members.

Preferably, there is mounted on the carrier frame at least a first arm which can be moved horizontally in order to retain laterally the plate-like elements when they are supported on the carrier frame.

Preferably, there is further provided on the carrier frame at least a second arm which can be moved vertically in order to retain the plate-like elements when they are supported on the carrier frame at the opposite side to a support base of the carrier frame.

In a second aspect thereof, the present invention is directed towards a method for moving plate-like elements by means of a movement device according to the preceding aspect.

Preferably, this method comprises the steps of:
- moving the carriage in at least the transport direction away from and towards a loading or unloading position of the plate-like elements,
- inclining the carrier frame with respect to a vertical plane in order to promote the loading or unloading of the plate-like elements on/from the carrier frame,
wherein the carrier frame is inclined with respect to the vertical plane by moving the carrier frame with respect to the first connection element of the articulated connection with free oscillation so as to vary the inclination of the carrier frame with respect to the carriage when the carrier frame is in a position of free suspension.

As a result of this method, it is possible to incline the carrier frame with respect to a vertical plane in a simple and precise manner, simply achieving the properties of free oscillation of the articulated connection between the carrier frame and the carriage.

Furthermore, the method for moving plate-like elements preferably comprises the steps of:
- providing the plate-like elements on the carrier frame,
- inclining the carrier frame so that the plate-like elements are supported on a back of the carrier frame with the lower edge thereof in an advanced position relative to the transport direction,
- moving the carriage in the transport direction as far as an unloading frame which is intended to receive the plate-like elements,
- advancing the carriage until the lower edge of the plate-like elements which are carried by the carrier frame is near or touches a lower edge of the unloading frame or other plate-like elements which are supported thereon,
- inclining the carrier frame with respect to the carriage until supporting the plate-like elements which are carried on the carrier frame on the unloading frame or on the other plate-like elements which are supported on the unloading frame.

This advantageously allows, for example, correct depositing of the plate-like elements which are transported by the carrier frame, suitably adapting the inclination of the carrier frame to that on an unloading frame or on the plate-like elements which are already present on the unloading frame.

Preferably, during the unloading step, while the carrier frame is inclined with respect to the vertical plane, the carriage is further advanced in the transport direction. More preferably, the carriage is further advanced in the transport direction until the articulated quadrilateral of the second connection element is deformed.

### Brief description of the drawings

The features and advantages of the invention will be better appreciated from the detailed description of a preferred embodiment thereof, which is illustrated by way of non-limiting example with reference to the appended drawings, in which:

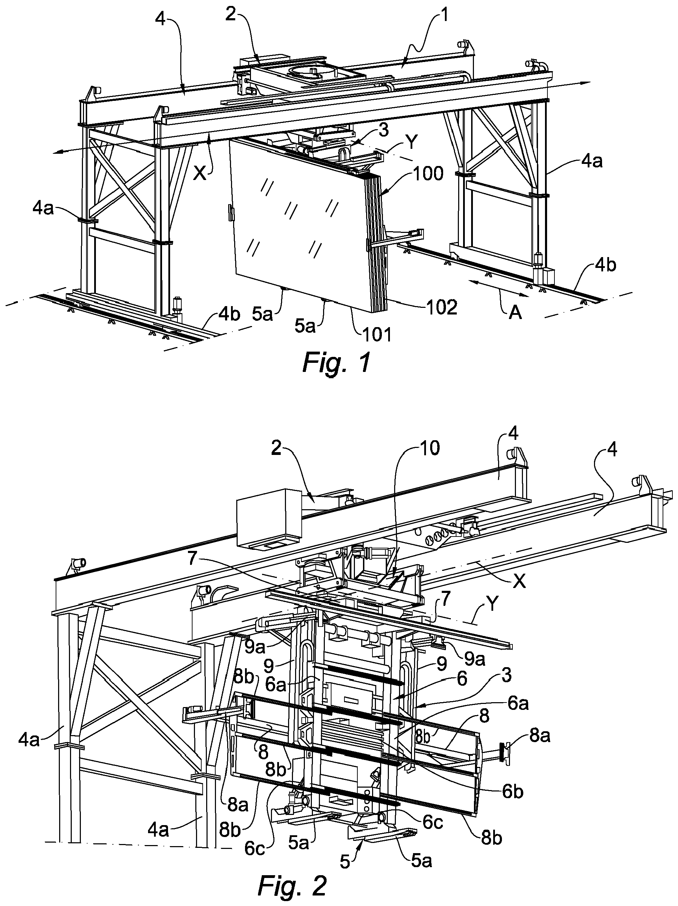

- Figure 1 is a perspective view of a device for moving plate-like elements which is constructed according to the present invention,
- Figure 2 is a perspective front view of the movement device of Figure 1 without any plate-like elements,

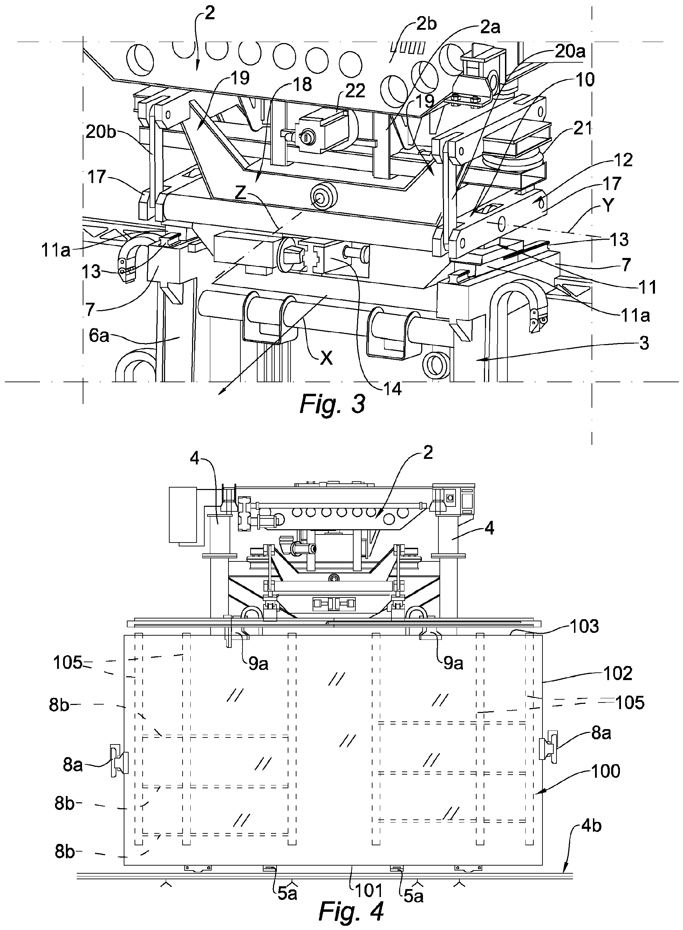

- Figure 3 is a perspective view, drawn to an enlarged scale, of a portion of the movement device of Figure 1,
- Figure 4 is a front view of the movement device of Figure 1,
- Figures 5 and 6 are schematic views of the movement device of Figure 1 in successive steps of a loading operation,
- Figures 7 to 10 are schematic views of the movement device of Figure 1 in successive steps of an unloading operation, in which, for clarity, the support beams have been removed.

### Preferred embodiment of the invention

With reference to the appended Figures, there is generally designated 1 a device for moving plate-like elements which is constructed according to the present invention.

The movement device 1 comprises a carriage 2, on which there is suspended a carrier frame 3, on which one or more plate-like elements 100 are intended to be supported.

In the preferred embodiment described here, the plate-like elements 100 are glass panels which have to be transported inside a storage warehouse, for example, towards a packaging and despatch zone.

In a typical application example, the plate-like elements 100 have dimensions of approximately 3 metres in terms of height and approximately 6 metres in terms of length and are grouped together in bundles of approximately 3 tonnes each. The carrier frame 3 is, for example, configured to transport up to 5 bundles of plate-like elements 100 (as can be seen in the Figures) for a total capacity of approximately 15 tonnes.

The carriage 2 is mounted with a capacity for sliding on a pair of horizontal support beams 4 which define with the longitudinal direction thereof a transport direction X of the plate-like elements 100.

In turn, the support beams 4 are supported at the opposite longitudinal ends thereof on respective pairs of uprights 4a, which support with a capacity for sliding on a pair of rails 4b which are placed on the ground parallel with a direction A which is substantially perpendicular to the transport direction X, according to a typical configuration of an overhead crane with portal.

In this manner, the carrier frame 3 may be moved to any desired location inside the plane which is defined by the support beams 4 and the rails 4b.

In an alternative embodiment, the support beams 4 can be supported on additional beams which are fixed to the walls of the warehouse.

The carrier frame 3 is coupled under the carriage 2 in order to be moved in the transport direction X and/or the direction A in a position raised off the ground.

The carrier frame 3 has a general C-shaped profile and comprises a base 5 which is formed by a pair of feet 5a, on which the respective lower edges 101 of the plate-like elements 100 are supported, a back 6 which extends vertically from the base 5 for supporting the plate-like elements 100 which support thereon the main surface thereof, and a pair of upper beams 7 which extend from the top of the back 6 parallel with the base 5.

In particular, the feet 5a and the upper beams 7 are substantially parallel with the transport direction X when the back 6 of the carrier frame 3 is in a vertical position.

The feet 5a are substantially perpendicular to the back 6 and extend so as to project from the base thereof by an extent which is adjustable by means of a motor member which is not illustrated in the Figures. For example, the feet 5a can project from the back 6 up to an extent of approximately from 40 to 50 cm.

In a construction variant of the present invention, there is further provision for the feet 5a to be able to oscillate with respect to the base of the back 6.

The back 6 comprises a pair of vertical uprights 6a, between which there extend cross-members 6b.

There further extend between the back 6 and the feet 5a load cells 6c which are capable of measuring the total weight of the plate-like elements 100 which are loaded on the carrier frame 3.

There is further provided on the carrier frame 3 a pair of first arms 8 which can extend horizontally in opposite directions from the back 6 and parallel therewith and which are capable of laterally retaining the plate-like elements 100 when they are supported on the carrier frame 3.

In particular, there is provided at the free ends of each first arm 8 an abutment element 8a which is extensible perpendicularly to the first arm 8 in a direction substantially parallel with the feet 5a and which is capable of abutting against a flank 102 of the plate-like elements 100 which are supported on the carrier frame 3.

Similarly, there is further provided on the carrier frame 3 a pair of second arms 9 which are vertically extensible in the same direction from the back 6 and parallel therewith in order to retain the plate-like elements 100 in the region of an upper edge 103 thereof.

To this end, at the free ends of each second arm 9, there is provided an abutment element 9a which is extensible perpendicularly to the second arm 9 in a direction substantially parallel with the feet 5a, which is capable of abutting the upper edge 103 of the plate-like elements 100.

There further preferably extend, between the uprights 6a and between the uprights 6a and the abutment elements 8a, retention elements 8b which are constructed in the form of a band of resilient material and which are provided to abut and retain spacers 105 which are interposed between the plate-like elements in order to allow the insertion of the abutment elements 8a and 9a therebetween.

In the embodiment described here, the retention elements 8b comprise 3 groups of bands of resilient material, each group being formed by three bands which extend parallel with the first arms 8 and which have different heights.

The spacers 105 can be formed by suitable strips of cardboard or polystyrene which are suspended on the upper edge 103 of the plate-like elements 100 and which extend vertically along a main surface thereof.

In this manner, the spacers 105 of the plate-like element 100 supported on the back 6 are advantageously retained by the retention elements 8b.

The carrier frame 3 is rigidly secured to the carriage 2 by means of an articulated connection with free oscillation, which is generally designated 10. In this manner, the carrier frame 3 can freely oscillate about a first oscillation axis Y, which is defined by the articulated connection 10, away from and towards a position of free suspension, in which the positioning of the carrier frame 3 with respect to the carriage 2 is brought about exclusively by gravitational force.

The articulated connection 10 comprises a first connection element 11 which is secured to the carrier frame 3, and a second connection element 12 which is secured to the carriage 2, wherein the first connection element 11 is hinged to the second connection element 12 in order to oscillate freely about the first oscillation axis Y, which extends horizontally substantially perpendicularly to the transport direction X.

In particular, the first connection element 11 comprises a pair of runners 11a which are slidingly coupled on respective guides 13 which are fixed to the upper beams 7 and which are movable along the beams 7 as a result of the action of a motor 4, which is mounted on the first connection element 11, which is directly connected to a pair of pinions which are engaged in respective racks which are fixedly joined to the upper beams 7. In this manner, the carrier frame 3 can be moved in translation with respect to the first connection element 11.

The second connection element 12 comprises a pair of bars 17, on each of which there is hinged a respective runner 11a in order to oscillate about the first oscillation axis Y, and a rocker arm 18 which is hinged to the carriage 2 in order to oscillate about a second oscillation axis Z, which is substantially parallel with the transport direction X.

The rocker arm 18 comprises two arms 19 which extend symmetrically from the second oscillation axis Z parallel with the first oscillation axis Y.

The bars 17 are parallel with the transport direction X and each of them is supported at the opposite longitudinal ends by a respective pair of rods 20a and 20b, which are in turn connected to the arms 19 of the rocker arm 18. In particular, each rod 20a, 20b is articulated at a first end thereof to one of the two bars 17 and at the second end thereof to a corresponding end region of one of the two arms 19.

In this manner, each bar 17 with the respective pair of rods 20 and an end region of the arm 19 forms an articulated quadrilateral which allows the bars 17 to oscillate freely with respect to the carriage 2.

There are interposed between the arms 19 of the rocker arm 18 and the carriage 2, preferably in a symmetrical position with respect to the second oscillation axis Z, respective damping members 21 which are capable of damping any lateral oscillations of the carrier frame 3.

Preferably, the rocker arm 18 is mounted on a movable structure 2a of the carriage 2, which can be moved in the vertical direction with respect to the main body 2b of the carriage 2 which is supported on the support beams 4. The movement of the movable structure is controlled by a motor 22.

There are further preferably arranged on the movement device 1 different position sensors (not illustrated in the Figures) which are capable of detecting the positioning of the carrier frame 3 in space and the relative position thereof with respect to what surrounds it, such as, for example, any plate-like elements to be loaded or an unloading frame on which the plate-like elements are intended to be supported during the transport step.

In particular, these sensors may comprise positioning sensors which are capable of detecting the position of the carrier frame 3 with respect to the carriage 2, the position of the carriage 2 with respect to the support beam 4 and the position thereof with respect to the rails 4b.

Furthermore, there can be mounted on the carrier frame 3 one or more inclinometers for measuring the inclination of the carrier frame 3 with respect to the vertical direction.

Additional sensors, for example ultrasound sensors, are further preferably provided for detecting the presence of objects in proximity of any specific components of the carrier frame 3, which are particularly important for the correct operation of the device 1, or for measuring the distance from an object in a predefined direction. For example, these proximity sensors may be arranged in the region of the feet 5a and/or the abutment elements 8a and 9a in order to allow a correct extension thereof from the back 6.

The movement device further comprises a control unit (not illustrated in the Figures) which controls all the movements of the carriage 2 and the carrier frame 3, receives and processes the signals from the various sensors which are associated with the device 1 and receives the inputs relating to the positioning of the plate-like elements to be moved, particularly in terms of number, starting position and end position of the operator.

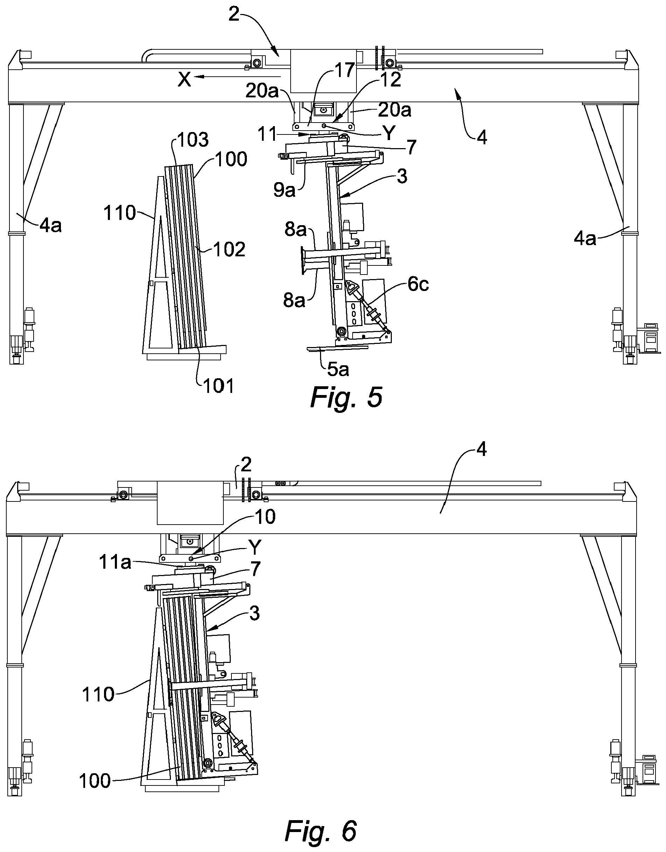

The movement device 1 is operated in the manners described below and illustrated schematically in Figures 5 to 10.

During the loading step of one or more plate-like elements 100 which may be grouped in bundles, the carrier frame 3 is moved as far as a support frame 110, from which the plate-like elements 100 have to be taken as a result of the action of the control unit which controls the movement of the uprights 4a in a suitable manner with respect to the rails 4b and the carriage 3 with respect to the support beam 4 in accordance with the coordinates which identify the position of the support frame 110.

During this step, the carrier frame 3 is inclined so that the back 6 is, to the greatest possible extent, parallel with the plane defined by the plate-like elements 100 with the first and second arms 8 and 9 completely extended laterally and upwards (Figure 5).

Once brought into contact with the plate-like elements 100 to be loaded, for example, following a suitable signal transmitted by a proximity sensor which is placed at the feet 5a, the carrier frame 3 is stopped, while the abutment elements 8a and 9a of the first arms 8 and the second arms 9, respectively, are extended by an extent substantially equal to the thickness of the plate-like elements 100 to be loaded. The carrier frame 3 is then raised so that the feet 5a abut the lower edge 101 of the plate-like elements 100 while the first and second arms 8, 9 are retracted towards the back 6 until abutting the plate-like elements 100 in the region of the opposing flanks 102 and the upper edge 103, respectively (Figure 6).

The use of proximity sensors and distance measuring devices may promote the correct movement of the abutment elements 8a, 9a as well as the feet 5a and first and second arms 8 and 9.

The plate-like elements 100 are then raised from the support frame 110 and moved by the movement device 1. In order to promote a more stable and safe support thereof, the carrier frame 3 is inclined so that the plate-like elements 100 are supported on the back 6 with the lower edge 101 thereof in an advanced position relative to the transport direction X.

The inclination of the carrier frame 3 is brought about by moving the runners 11a with respect to the guides 13. Consequently, the carrier frame 3 oscillates with respect to the first oscillation axis Y which secures it to the carriage 2 so as to be brought into a position of free suspension with respect to the carriage 2.

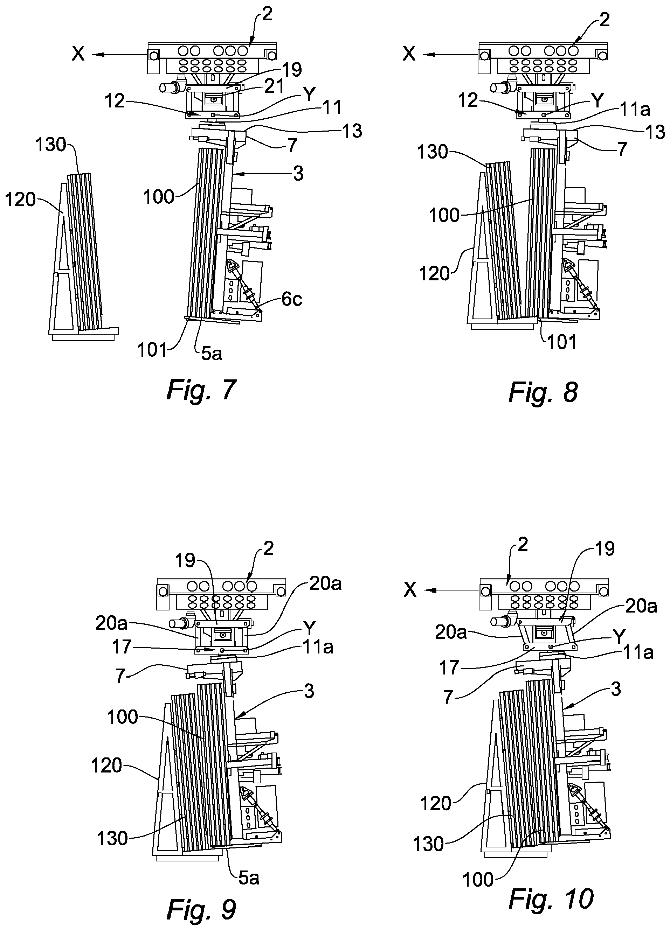

The carrier frame 3 is then moved in the direction A and/or in the transport direction X until reaching an unloading frame 120 which is intended to receive the plate-like elements 100. There may be present on the unloading frame 120 additional plate-like elements 130 on which the plate-like elements 100 also have to be supported (Figure 7).

If, during the movement, the carrier frame 3 is subjected to an unforeseen lateral stress, for example, as a result of an obstacle (even a small one) during the movement of the support beams 4 in the direction A, the rocker arm 18 can oscillate about the second oscillation axis Z so as to urge one of the damping members 21 (or both of them) and to absorb the stress without any damage.

The carrier frame is then positioned at the front of the unloading frame 120 and the carriage 2 is advanced slowly in the transport direction X until the lower edge 101 of the plate-like elements 100 is near or touches a lower edge of the plate-like elements 130 which are supported on the unloading frame 120 (or directly of the unloading frame 120, in the absence of any plate-like elements 130) (Figure 8).

Once the lower edge 101 is in the intended position, the carrier frame 3 is again inclined with respect to the carriage 2 (Figure 9) in order to move the plate-like elements 100 into a parallelism state with respect to the plate-like elements 130 and therefore to support them thereon.

The inclination variation is carried out in the same manner set out above, by moving the runners 11a on the rails 13 so as to move the carrier frame 3 with respect to the first connection element 11, bringing about an oscillation of the carrier frame about the first oscillation axis Y which is capable of moving the carrier frame 3 into a position of free suspension with the centre of gravity of the system formed by the carrier frame 3 and the plate-like elements 100, precisely on the vertical of the first oscillation axis Y.

In the undesirable case of an impact of the carrier frame 3 or the plate-like elements 110 against the plate-like elements 130 or other obstacles, the carrier frame 3 is capable of oscillating freely about the first oscillation axis Y so as to absorb the impact and to prevent or at least limit any damage.

However, it will be noted that the articulated connection with free oscillation provided between the carrier frame 3 and the carriage 2 is not only used as a safety element for the movement device 1 but is also advantageously used as a mechanism for varying the inclination of the carrier frame 3 with respect to the carriage 2.

Preferably, in order to promote the correct support of the plate-like elements 100 on the plate-like elements 130, the carriage 2 is further advanced in the transport direction X while the inclination of the carrier frame 3 is modified in the manners described above.

At the time at which the plate-like elements 100 are supported on the plate-like elements 130, the additional movement of the carriage 2 in the transport direction X brings about the movement of the carrier frame 3 with respect to the carriage 2 as a result of the deformation of the articulated quadrilateral caused by the oscillation of the rods 20a and 20b (Figure 10).

This deformation, in addition to providing an additional level of safety of the movement device 1, allows, when it is suitably detected, a definition of a complete support position of the plate-like elements 100 and therefore of stopping the carriage 2, lowering the carrier frame 3, opening the first and second arms 8 and 9 in order to release the plate-like elements 100 and moving the empty carrier frame 3.

Therefore, the present invention solves the problem set out above with reference to the cited prior art, at the same time affording a number of other advantages, including providing a device for moving plate-like elements which is substantially automated, rapid, safe and efficient.

## Claims

1. A device (1) for moving plate-like elements (100) comprising:
- a carriage (2) which can be moved along a transport direction (X),
- a carrier frame (3), on which the plate-like elements (100) are intended to be supported, the carrier frame being coupled under the carriage in order to be moved at least in the transport direction into a position raised off the ground and
**characterized in that** the carrier frame (3) is rigidly secured to the carriage (2) by means of an articulated connection (10) with free oscillation in such a manner that the carrier frame can oscillate freely about a first oscillation axis (Y), at least over a limited extent, away from and towards a position of free suspension of the carrier frame (3) with respect to the carriage (2).

2. A device according to claim 1, wherein the first oscillation axis (Y) is substantially perpendicular to the transport direction (X).

3. A device according to claim 1 or claim 2, wherein the articulated connection (10) comprises a first connection element (11) which is secured to the carrier frame (3) and which is hinged to a second connection element (12) which is secured to the carriage (2) in order to freely oscillate about the first oscillation axis (Y).

4. A device according to claim 3, wherein the carrier frame (3) is secured to the first connection element (11) with a capacity for relative movement with respect thereto so as to vary the inclination of the carrier frame (3) with respect to the carriage (2) when the carrier frame is in the position of free suspension.

5. A device according to claim 4, wherein there is provided between the first connection element (11) and the carrier frame (3) a motorized movement member (11, 14) which is provided to move the carrier frame with respect to the first connection element along a guide system (13).

6. A device according to any one of claims 3 to 5, wherein the second connection element (12) comprises at least one bar (17), on which the first connection element (11) is hinged and which is secured to the carriage with a capacity for free oscillation.

7. A device according to claim 6, wherein the at least one bar (17) is supported on the carriage by means of a pair of rods (20a, 20b), each of which is articulated both to an end of the bar (17) and to the carriage (2) so as to form, as a whole, an articulated quadrilateral.

8. A device according to claim 6 or claim 7, wherein the at least one bar (17) extends parallel with the transport direction (X).

9. A device according to any one of claims 3 to 8, wherein the second connection element (12) comprises a rocker arm (18) which is secured to the carriage by means of a hinge coupling about a second oscillation axis (Z) which is substantially parallel with the transport direction (X).

10. A device according to claim 9, wherein the second connection element (12) comprises two of the bars (17), which are supported on the rocker arm (18) at symmetrically opposite sides with respect to the second oscillation axis (Z) by means of respective pairs of the rods (20a, 20b).

11. A device according to claim 9 or claim 10, wherein there are interposed between the rocker arm (18) and the carriage (2), at one side and the other of the second oscillation axis (Z), respective damping members (21).

12. A device according to any one of the preceding claims, wherein there is provided on the carrier frame (3) at least a first arm (8) which can be moved horizontally in order to retain laterally the plate-like elements (100) when they are supported on the carrier frame.

13. A device according to any one of the preceding claims, wherein there is provided on the carrier frame (3) at least a second arm (9) which can be moved vertically in order to retain the plate-like elements (100) when they are supported on the carrier frame at the opposite side to a base (5) of the carrier frame.

14. A method for moving plate-like elements (100) by means of a movement device (1) according to any one of the preceding claims, the method comprising the steps of:
- moving the carriage (2) in at least the transport direction (X) away from and towards a loading or unloading position of the plate-like elements (100),
- inclining the carrier frame (3) with respect to a vertical plane in order to promote the loading or unloading of the plate-like elements on/from the carrier frame,
**characterized in that** the carrier frame is inclined with respect to the vertical plane by moving the carrier frame (3) with respect to a first connection element (11) of the articulated connection (10) with free oscillation so as to vary the inclination of the carrier frame (3) with respect to the carriage (2) when the carrier frame is in a position of free suspension.

15. A method according to claim 14, wherein there are provided the steps of:
- providing the plate-like elements (100) on the carrier frame (3),
- inclining the carrier frame (3) so that the plate-like elements (100) are supported on a back of the carrier frame with the lower edge (101) thereof in an advanced position relative to the transport direction (X),
- moving the carriage (2) in the transport direction as far as an unloading frame (120) which is intended to receive the plate-like elements (100),
- advancing the carriage (2) until the lower edge (101) of the plate-like elements (100) which are carried by the carrier frame is near or touches a lower edge of the unloading frame or other plate-like elements (130) which are supported thereon,
- inclining the carrier frame (3) with respect to the carriage (2) until supporting the plate-like elements (100) which are carried on the carrier frame on the unloading frame (120) or on the other plate-like elements (130) which are supported on the unloading frame.

16. A method according to claim 15, wherein, while the carrier frame (3) is inclined with respect to the carriage (2) until supporting the plate-like elements (100) on the unloading frame (120) or on the other plate-like elements (130) supported on the unloading frame, the carriage (2) is further advanced in the transport direction (X).
